# EUROPÄISCHE PATENTSCHRIFT

(11) **EP 0 767 048 B1**
(45) Veröffentlichungstag und Bekanntmachung des Hinweises auf die Patenterteilung: **27.11.2002**
(21) Anmeldenummer: 96115420.0
(22) Anmeldetag: 26.09.1996
(51) Int. Cl.: B29C 61/06, H02G 15/18, C08J 3/24

(54) **Verfahren zum Herstellen einer Schrumpfmanschette aus thermoplastischem Kunststoff für Kabelmuffen**
Method for manufacturing a thermoplastic shrinkable sleeve for cables
Procédé de fabrication d'un manchon de cables rétractables en matière thermoplastique

(30) Priorität: 06.10.1995 DE 19537208; 19.09.1996 DE 19638244
(43) Veröffentlichungstag der Anmeldung: 09.04.1997
(73) Patentinhaber: CCS Technology, Inc., Wilmington, DE 19803 (US)
(72) Erfinder: Nicolai, Norbert, Dr., 46282 Dorsten (DE)
(74) Vertreter: Sturm, Christoph, Dipl.-Ing.

(56) Entgegenhaltungen:
- EP-A- 0 032 001
- EP-A- 0 063 913
- EP-A- 0 117 738
- FR-A- 2 096 764
- GB-A- 2 166 978
- GB-A- 2 167 319
- US-A- 4 528 354

## Beschreibung

Die Erfindung betrifft ein Verfahren zum Herstellen einer Schrumpfmanschette aus thermoplastischem Kunststoff für Kabelmuffen, insbesondere als Umhüllung für Kabelverbindungen und/oder Kabelabzweigungen.

Es sind Schrumpfmanschetten zum Aufschrumpfen auf Kabelverbindungen und/oder Kabelabzweigungen bekannt, die mit einem Kleber beschichtet sind, um eine hinreichende Haftung mit den Kabeln zu erreichen. Die bekannten Kleber versagen jedoch dann, wenn derartige Schrumpfmanschetten bei druckluftüberwachten Kabelnetzen eingesetzt werden. Denn in solchen Fällen können die Kleber die Innendrücke speziell über längere Zeit oder bei erhöhten Temperaturen nicht aufnehmen, und es kommt zum Versagen der Schrumpfmanschette. Zwar kennt man spezielle Kleber für die Anwendungen in druckluftüberwachten Kabelnetzen, jedoch verlangen diese Kleber eine deutlich dickere und damit festere Manschette, wie sie als faserverstärkte Manschetten aus den Patenten DE 38 33 415 und EP 0 116 393 bekannt sind.

Für Standardmanschetten mit einer Dicke von ca. der Hälfte der oben genannten Manschettentypen ist ein Kleber bekannt, der eine 50fach höhere Viskosität als die bekannten Schmelzkleber besitzt und den Anforderungen an den druckdichten Bereich erfüllt. Jedoch verlangt ein solcher Kleber eine deutlich höhere Wärmezufuhr, welche im ungünstigsten Fall bei der Installation zur Zerstörung der Schrumpfmanschette führen kann.

Zusätzlich besteht bei Schrumpfmanschetten die Gefahr, daß diese bei Einwirkung erhöhter Temperaturen, z. B. im Falle eines Brandes zur Verbreitung des Brandes durch abtropfenden Kleber bzw. Abfallen der zerstörten Manschette durch fehlende Kleberhaftung beitragen. Denn bei einer vollständigen Erwärmung sinkt in der Regel die Viskosität des Klebers so stark, daß dieser speziell an den Enden der Schrumpfmanschette abtropfen kann. Mit weiter steigender Temperatur vergrößern sich die Spannungen innerhalb der Manschette und es kommt zum Aufreißen und schlimmstenfalls vollständigen Ablösen der Manschette vom Kabelspleiß und/oder Kabel. Jedenfalls besteht selbst bei teilweiser Erwärmung die Gefahr, daß die Manschette aufreißt und der Kleber abtropfen kann. - Hier setzt die Erfindung ein.

Der Erfindung liegt die Aufgabe zugrunde, ein Verfahren anzugeben, wonach sich Schrumpfmanschetten zur druckdichten Umhüllung von Kabelverbindungen und/oder Kabelabzweigungen herstellen lassen, die sich durch eine einwandfreie Haftung zwischen Manschette, Kleber und Kabel - auch bei erhöhten Temperaturen - auszeichnen.

Diese Aufgabe löst die Erfindung bei einem gattungsgemäßen Verfahren dadurch, daß die Innenfläche der Schrumpfmanschette bereichsweise oder vollständig mit einem mittels eines Vernetzers vernetzbaren Heißschmelzkleber beschichtet wird, wobei der Vernetzer im wesentlichen aus einem Peroxid oder einem Peroxid/Beschleuniger-Gemisch sowie einem anorganischen Trägermaterial oder einem organischen Trägermaterial besteht, wobei das Peroxid oder Peroxid/Beschleuniger-Gemisch mittels des Trägermaterials auf oder in die mit dem Heißschmelzkleber bereits beschichtete Innenfläche aufgebracht oder eingebracht wird.

Die Erfindung geht hierbei von der Erkenntnis aus, daß ein vernetzbarer Heißschmelzkleber einerseits eine schnelle Aktivierung dieses Klebers gewährleistet, andererseits eine Erhöhung der Festigkeit und der Haftkraft des Klebers speziell bei Temperaturen oberhalb der Raumtemperatur erreicht wird und genutzt werden kann. Insbesondere wird durch die Vernetzung des Heißschmelzklebers im Zuge einer Erwärmung bzw. Erhitzung erreicht, daß dieser nicht mehr fließen bzw. abtropfen kann. Sofern die Schrumpfmanschette selbst aus flammgeschütztem Material hergestellt ist, wird insgesamt eine flammgeschützte Ausführung von Schrumpfmanschette und Kleber bzw. Heißschmelzkleber erreicht, so daß die Manschette nicht brennbar ist.

Im einzelnen sieht die Erfindung vor, daß als Heißschmelzkleber ein Kunststoffkleber verwendet wird. Dieser Kunststoffkleber kann im wesentlichen aus Polyamiden, Polyolefinen oder Polymeren, welche bevorzugt zur Gummiherstellung verwendet werden, alleine oder in Mischung der einzelnen Polymere oder der einzelnen Stoffgruppen untereinander, bestehen.

Bei dem Kunststoffkleber auf Polyamidbasis kann es sich um einen handelsüblichen Kleber handeln, der zur Verbesserung der Vernetzbarkeit im Herstellungsprozeß mit den genannten Polyolefinen oder Copolymeren versetzt wird.

Als Polyolefine können die einzelnen Polyethylentypen, wie
- Polyethylen hoher Dichte (HDPE)
- Polyethylen niedriger Dichte (LDPE)
- lineares Polyethylen niedriger Dichte (LLDPE)
- Polyethylen mit sehr niedriger Dichte (VLDPE)

Ethylen-Vinylacetat (EVA), Etylen-Methacrylat (EMA), Ethylen-Buthylacrylat (EBA) verwendet werden. Polymere, die vorrangig zur Gummiherstellung eingesetzt werden, sind Ethylen-Propylen-Terpolymer, EPM Ethylen-Propylen-Kautschuk, Butadien- oder Butylkautschuk.

Jedenfalls kommen als Heißschmelzkleber solche Kunststoffe in Frage, welche durch Wärme im Zusammenhang mit einem Zusatzstoff zu vernetzen sind und eine entsprechende Haftung zwischen Schrumpfmanschette und Kabel gewährleisten. Dabei wird die Schrumpfmanschette im Anwendungsfall um das bzw. die zu umschließenden Kabel, Kabelverbindungen und/oder Kabelabzweigungen herumgelegt. Zusätzlich ist ein Vernetzer vorgesehen, welcher im Zuge des Schrumpfens infolge Wärmezuführung aktiviert werden kann. Der Heißschmelzkleber ändert folglich seine Eigenschaften und sorgt für eine einwandfreie Haftung zwischen Schrumpfmanschette und Kabel auch bei erhöhten Temperaturen.

Dabei besteht der Vernetzer nach einem Vorschlag der Erfindung mit selbständiger Bedeutung im wesentlichen aus einem Peroxid oder einem Peroxid/Beschleuniger-Gemisch und bei einem direkten Einbringen des Peroxides in den Kleber zusätzlich noch aus einem Vernetzungsverzögerer (Phlegmatisator). Durch diesen Phlegmatisator wird die Vernetzung des Klebers so weit verzögert, das ein Vernetzen während der Verarbeitung im Extruder oder Faßaufschmelzgerät noch nicht vonstatten geht sondern erst im Einsatz. Zur Minimierung der Aufenthaltszeit des Peroxides oder Peroxid/Beschleuniger-Gemisches mit Phlegmatisator im heißen Kleber empfiehlt es sich, einen Schmelzextruder zu verwenden, da die Zeit bei der eine Reaktionstemperatur vorliegt, deutlich geringer ist als in einem Faßaufschmelzgerät.

Eine andere Möglichkeit besteht darin, die Aufenthaltszeit des Peroxid oder Peroxid/Beschleuniger-Gemisches mit Phlegmatisator zu minimieren, indem diese Substanzen kurz vor der Kleberauftragsdüse zum Kleber dazu gegeben werden. Zur Erreichung einer gleichmäßigen Vernetzung ist der Einsatz eines Mischelementes (Statikmischers) notwendig.

Nach einer weiteren bevorzugten Ausführungsform der Erfindung mit selbständiger Bedeutung ist vorgesehen, daß der Vernetzer im wesentlichen aus einem Peroxid oder einem Peroxid/Beschleuniger-Gemisch sowie einem anorganischen Trägermaterial, z. B. Kieselsäure, oder einem organischen Trägermaterial, insbesondere Kunststoff, besteht, wobei das Peroxid oder Peroxid/Beschleuniger-Gemisch mittels des Trägermaterials auf bzw. in die mit dem Heißschmelzkleber bereits beschichtete Innenfläche aufgebracht bzw. eingebracht wird. In diesem Fall ist der Heißschmelzkleber immer noch weich, jedenfalls liegt dessen Temperatur unter der Reaktionstemperatur des Peroxides bzw. Peroxid/Beschleuniger-Gemisches. Folglich kann auf einen Reaktionshemmer verzichtet werden. Dabei kann als Vernetzer ein mit Peroxid oder ein mit Peroxid und einem Beschleuniger gefüllter Kunststoff verwendet werden. In diesem Fall sollten als Kunststoff für den Kleber bzw. Heißschmelzkleber und als Kunststoff für den Vernetzer vorzugsweise identische oder zumindest mischungsfreundliche, gut mischbare Kunststoffe eingesetzt werden. In der Regel werden als Vernetzer ein mit Peroxid oder mit Peroxid/Beschleuniger-Gemisch gefülltes Kunststoff-Trägermaterial, z. B. eine Folie, insbesondere Lochfolie, oder Netz, oder mit Peroxid bzw. Peroxid/Beschleuniger-Gemisch gefüllte Hohlkugeln verwendet. Für den Fall, daß die (mit Peroxid oder Peroxid/Beschleuniger-Gemisch gefüllte) Folie oder das Netz als Vernetzer dem Heißschmelzkleber zugegeben wird, wird so vorgegangen, daß dazu die Folie bzw. das Netz nach dem Herstellen der Heißschmelzkleberbeschichtung auf der Schrumpfmanschette auf den noch warmen Heißschmelzkleber aufgebracht, z. B. aufgewalzt oder aufkaschiert, und mit diesem verbunden, z. B. verklebt, wird. Im Zuge des Aufbringens der Folie bzw. des Netzes ist auch ein Festwalzen möglich, wobei eine profilierte Walze Verwendung finden kann. Zur besseren Durchmischung der Folie mit dem Kleber besitzt die vorzugsweise als Lochfolie ausgeführte Folie entsprechende Durchbrüche in unterschiedlichsten Formen. Die Abmessungen dieser Durchbrüche bzw. Öffnungen können dabei im Bereich von 0,5 mm bis 50 mm, bevorzugt zwischen 1 mm bis 10 mm, liegen. Deren Form ist hauptsächlich rund oder quadratisch. Jedenfalls wird bei einer eliptischen oder rechteckigen Form der Durchbrüche bzw. Öffnungen so vorgegangen, daß die kurzen Seiten immer in Schrumpfrichtung angeordnet sind. Im Zuge des Aufbringens der Folie bzw. des Netzes ist auch ein Festwalzen möglich, wobei eine profilierte Walze Verwendung finden kann.

Sofern ein Netz, insbesondere extrudiertes Netz, aufgebracht wird, läßt sich über dessen Fadendicke der Gewichtsanteil des Vernetzers im Heißschmelzkleber einstellen. Regelmäßig beträgt die Dicke der einzelnen Fäden für diesen Fall zwischen 0,3 mm und 1,5 mm.

Es ist aber auch möglich, daß eine mit Peroxid oder Peroxid/Beschleuniger-Gemisch versetzte Folie direkt vor dem Schrumpfvorgang als Zusatzfolie auf den Kleber aufgelegt wird und dann die Manschette geschrumpft wird. Zusätzlich kann der Kleber auch insgesamt als Folie auf die Schrumpfmanschette aufkaschiert werden, wobei diese Kleberfolie in einem vorgeschalteten Schritt nach den beschriebenen Möglichkeiten mit Peroxid oder Peroxid/Beschleuniger-Gemisch versetzt worden ist.

In jedem Fall wird als Trägermaterial insbesondere ein Kunststoff verwendet, dessen Verarbeitungstemperatur deutlich niedriger als die Verarbeitungstemperatur des eingesetzten Heißschmelzklebers ist. Auf diese Weise wird gewährleistet, daß das Peroxid bzw. Peroxid/Beschleuniger-Gemisch bei der Verarbeitung nicht reagiert sofern bei der Verarbeitung des Trägermaterials unterhalb dessen Schmelztemperatur gearbeitet wird. Dies ist regelmäßig der Fall. Zu den vorbeschriebenen Kunststoffen gehören bevorzugt Copolymere. Immer ist jedoch Voraussetzung, daß sich der Kunststoff des Heißschmelzklebers und der Kunststoff des Trägermaterials vertragen, d. h. identische oder zumindest mischungsfreundliche Kunststoffe für den Kleber und für den Vernetzer verwendet werden. Durch die deutlich unterschiedlichen Verarbeitungstemperaturen einerseits des Trägermaterial-Kunststoffes andererseits des eingesetzten Klebers wird erreicht, daß bei Hitzeeinwirkung auf die Schrumpfmanschette und damit den Heißschmelzkleber zunächst der Kunststoff des Trägermaterials schmilzt und somit das Peroxid bzw. Peroxid/Beschleuniger-Gemisch mit dem Kleber unter Vernetzung reagieren kann. Hierdurch wird verhindert, daß bei weitersteigender Temperatur der Kleber selbst zu fließen anfängt. Hierbei ist jedoch insgesamt zu berücksichtigen, daß mit steigender Vernetzung die Haftung des Klebers abnimmt, so daß diesem Prozeß hierdurch Grenzen gesetzt sind.

Sofern für das Trägermaterial der gleiche Kunststoff wie für den Kleber eingesetzt wird, wird der Trägermaterial-Kunststoff regelmäßig entsprechend modifiziert, indem mit anderen Maschinenparametern beispielsweise bei einer Extrusionsanlage gearbeitet wird. Jedenfalls wird der Kunststoff des Trägermaterials so gegenüber dem für die Kleberbeschichtung verwendeten Kunststoff verändert, daß eine Verarbeitung bei niedrigeren Temperaturen als die Verarbeitungstemperatur der Kleberschicht möglich ist. Folglich wird zum einen eine Vernetzung verhindert, bestehen zum anderen bei diesen niedrigen Verarbeitungstemperaturen verbesserte Möglichkeiten, ein phlegmatisiertes Peroxid zu verarbeiten. Dabei ist immer gewährleistet, daß das temperaturempfindliche Peroxid bzw. Peroxid/Beschleuniger-Gemisch nicht reagieren kann.

Für den Fall, daß als Vernetzer die gefüllten Hohlkugeln dem Heißschmelzkleber zugegeben werden, wird so vorgegangen, daß dazu die Hohlkugeln nach dem Herstellen der Heißschmelzkleberbeschichtung auf der Schrumpfmanschette auf den noch haftfähigen Heißschmelzkleber aufgestreut und gegebenenfalls aufgewalzt bzw. eingewalzt und mit diesem verbunden werden. Folglich werden die pulvrigen oder körnigen Hohlkugeln, insbesondere Mikrohohlkugeln, auf den Kleber im teigigen Zustand aufgestreut, so daß noch eine Haftung gegeben ist. Die Hohlkugeln können zusätzlich aufgewalzt bzw. eingewalzt werden, und zwar mittels profilierter oder genoppter Walzen, so daß auch eine Durchmischung der Heißschmelzkleberbeschichtung mit den Hohlkugeln in der Tiefe stattfindet. In diesem Fall lassen sich bevorzugt genoppte Walzen mit einem Durchmesser der Noppen von 0,5 mm bis 5 mm, insbesondere 1 mm, einsetzen. Dabei ist der Abstand der Noppen so gewählt, daß er in etwa in der gleichen Größenordnung wie der Noppendurchmesser liegt. Jedenfalls ist bei dieser Vorgehensweise die Temperatur des Klebers so niedrig, daß eine Reaktion des Peroxids bzw. Peroxid/Beschleuniger-Gemisches ausgeschlossen ist. Die Noppentiefe bzw. Eindringtiefe der Noppen in die Heißschmelzkleberbeschichtung beträgt zwischen 20 % bis 95 % der Kleberschichtdicke.

Die Konzentration des Peroxids oder des Peroxid/Beschleuniger-Gemisches in dem Trägermaterial (Kunststoff, anorganisches Trägermaterial oder Hohlkugeln) liegt vorzugsweise zwischen 5 Gew.-% bis 95 Gew.-% und der solchermaßen vorbereitete Vernetzer wird vorzugsweise in einer Konzentration von 0,1 Gew.-% bis 20 Gew.-%, bevorzugt 1 Gew.-% bis 4 Gew.-%, auf die mit dem Heißschmelzkleber beschichtete Innenfläche der Schrumpfmanschette aufgebracht. Als Peroxid kann ein organisches Peroxid, insbesondere 1,1-Di(t-butylperoxy)-3,3,5-trimethylcyclohexan eingesetzt werden. Möglich ist aber auch die Verwendung folgender Peroxide:
- 2,5-Dimethyl-2,5-di-(t-butylperoxy)hexin-3
- 2,5-Dimethyl-2,5-di-(t-butylperoxy)hexan
- a,a'-Di(t-butylperoxy)diisopropybenzol
- Dicumylperoxid (Bis(1-methyl-1-phenylethyl)peroxid)
- Ethyl-3,3-di(t-butylperoxy)butyrat
- Ethyl-3,3-di(t-amylperoxy)butyrat
- n-Butyl-4,4-di(butylperoxy)valerat
- 1,1-Di(t-butylperoxy)cyclohexan.

Sofern ein Peroxid/Beschleuniger-Gemisch Verwendung findet, enthält dieses vorzugsweise mehr als 10 Gew.-% Peroxid.

Es sollte betont werden, daß die eingesetzten Peroxide eine Lagerung der Schrumpfmanschetten bei ca 50° C für drei Jahre gewährleisten. Außerdem wird eine kurzzeitige thermische Belastung bis zu 70° C aufgenommen, ohne daß eine merkliche Änderung der Viskosität des Heißschmelzklebers zu beobachten ist. Das heißt, die Viskositätssteigerungen betragen maximal 10 %. Die Vernetzungstemperatur liegt bei ca. 100° C, wobei keine Gase und auch sonst keine giftigen Nebenprodukte entstehen. Außerdem tritt eine Diffusion des Peroxides aus dem Trägermaterial ebensowenig wie aus dem Heißschmelzkleber im nichtgebundenen Zustand auf.

Als Beschleuniger findet bevorzugt ein reaktives Monomer und/oder Oligomer mit zumindest zwei reaktionsfreudigen Doppel- und/oder Dreifach-Kohlenstoff-Kohlenstoff-Bindungen, insbesondere flüssiges Triallylcyanurat oder Triallylisocyanurat, Verwendung. Darüber hinaus können folgende Beschleuniger eingesetzt werden:
- Triallyltrimellitat
- Triallylphosphat
- Triallylpropan
- Trimethacrylat
- Ethylenglycoldimethacrylat.

Die vorgenannten Beschleuniger können einzeln oder in Mischungen in Verbindung mit dem Peroxid zu dem Peroxid/Beschleuniger-Gemisch verarbeitet werden.

Im folgenden wird die Erfindung anhand eines Ausführungsbeispieles näher erläutert:

Im einzelnen wird eine Schrumpfmanschette durch Extrusion hergestellt, welche sich durch verminderte Rißanfälligkeit auszeichnet. Nachfolgend erfolgt eine Vernetzung und ein Verstrecken der Schrumpfmanschette, die im verstreckten Zustand abgekühlt wird. Die Schrumpfmanschette kann aus einer Peroxid enthaltenen Kunststoffbahn hergestellt werden, welche bei einer Temperatur unterhalb der Reaktionstemperatur des Peroxids extrudiert wird, wobei die Kunststoffbahn danach teilvernetzt und bei einer Temperatur unterhalb der Kristallitschmelzpunkte bzw. im Übergangsbereich vom glas- zum kautschukelastischen Bereich der teilvernetzten Kunststoffbahn kalt verstreckt wird. Abschließend wird die Kunststoffbahn erst bei dem später stattfindenden Wärmeschrumpfprozeß fertig vernetzt. - Darüber hinaus kann die Schrumpfmanschette eine Deckschicht aus einem thermomorphen Kunststoffmaterial aufweisen, so daß im Zuge des Schrumpfvorganges die für einen einwandfreien Schrumpfprozeß erforderlichen Temperaturen durch Farbumschlag angezeigt werden. In diese Deckschicht können äußer einem Thermoindikator ferner Schutzmittel gegen Mikroorganismen und Nagetiere bzw. Nagerfraß sowie Insektizide eingebracht sein.

Nach dem Vernetzen und Verstrecken der solchermaßen hergestellten Schrumpfmanschette wird diese mit einem thermoplastischem Kleber, im Ausführungsbeispiel unter Verwendung einer Mischung aus VLDPE (very low density polyethylene) Polyethylen mit sehr niedriger Dichte und EBA (Ethylen-Butylenazetat-Copolymer) beschichtet. Diese Beschichtung erfolgt bei einer Temperatur von 170° C. Anschließend wird der Kleber abgekühlt oder kühlt von selber ab, wobei bei einer Temperatur von ca. 70° C des Klebers eine Folie als Vernetzer mit einer Profilwalze aufgewalzt wird. Jedenfalls ist die Temperatur so gewählt, daß die Vernetzung im thermoplastischem Kleber nicht stattfinden kann. Hierfür sorgt das Trägermaterial aus Kunststoff in Form der Folie, welches erst bei höheren Temperaturen (ca. 100° C) als die Verarbeitungstemperatur (70° C) zu schmelzen anfängt und die Vernetzungsreaktion des eingeschlossenen Peroxids oder Peroxid/Beschleuniger-Gemisches mit dem thermoplastischen Kleber ermöglicht.

Die Folie ist als Lochfolie ausgeführt und weist runde Löcher mit einem Durchmesser von ca. 3 mm auf und die Profiltiefe der Walze beträgt ca. 0,5 mm, so daß es zum teilweisen Vermischen von thermoplastischem Kleber und Peroxid-Trägermaterial bzw. Folie kommt. Der Thermoindikator in der Deckschicht der Schrumpfmanschette ist auf die Peroxidreaktionstemperatur bzw. Vernetzungstemperatur (ca. 100° C) abgestimmt, so daß bei einem Umschlagen der Farbe angezeigt wird, daß eine Vernetzung des thermoplastischen Klebers stattgefunden hat. Folglich läßt sich von außen erkennen, ob die entsprechende Schrumpfmanschette den für eine Vernetzungstemperatur des Klebers erforderlichen Temperaturen ausgesetzt war. Jedenfalls ist immer gewährleistet, daß die nach dem erfindungsgemäßen Verfahren hergestellte Schrumpfmanschette speziell bei höheren Temperaturen einem aufgebauten Innendruck standhalten kann.

## Patentansprüche

1. Verfahren zum Herstellen einer Schrumpfmanschette aus thermoplastischem Kunststoff für Kabelmuffen, insbesondere als Umhüllung für Kabelverbindungen und/oder Kabelabzweigungen, wobei die Innenfläche der Schrumpfmanschette bereichsweise oder vollständig mit einem mittels eines Vernetzers vernetzbaren Heißschmelzkleber beschichtet wird, wobei der Vernetzer im wesentlichen aus einem Peroxid oder einem Peroxid/Beschleuniger-Gemisch sowie einem anorganischen Trägermaterial oder einem organischen Trägermaterial besteht, wobei das Peroxid oder Peroxid/Beschleuniger-Gemisch mittels des Trägermaterials auf oder in die mit dem Heißschmelzkleber bereits beschichtete Innenfläche aufgebracht oder eingebracht wird.

2. Verfahren nach Anspruch 1, **dadurch gekennzeichnet, daß** als Heißschmelzkleber ein Kunststoffkleber verwendet wird.

3. Verfahren nach Anspruch 2, **dadurch gekennzeichnet, daß** der Kunststoffkleber im wesentlichen unter Verwendung von Polyamid, Polyolefinen oder Polymeren, welche bevorzugt zur Gummiherstellung eingesetzt werden wie z. B. EPDM, EPM, Butadien oder Buthylkautschuk, oder unter Verwendung einer Mischung der vorgenannten Bestandteile hergestellt wird.

4. Verfahren nach Anspruch 1, **dadurch gekennzeichnet, daß** als Vernetzer ein mit Peroxid oder mit Peroxid/Beschleuniger-Gemisch gefülltes Kunststoff-Trägermaterial, z.B. eine Folie, insbesondere Lochfolie, oder ein Netz, oder mit Peroxid bzw. Peroxid/Beschleuniger-Gemisch gefüllte Hohlkugeln verwendet werden.

5. Verfahren nach Anspruch 4, **dadurch gekennzeichnet, daß** die Folie oder das Netz als Vernetzer dem Heißschmelzkleber zugegeben wird und dazu die Folie bzw. das Netz nach dem Herstellen der Heißschmelzkleberbeschichtung auf der Schrumpfmanschette auf den noch warmen Heißschmelzkleber aufgebracht, z.B. aufgewalzt oder aufkaschiert, und mit diesem verbunden, z.B. verklebt, wird.

6. Verfahren nach Anspruch 4, **dadurch gekennzeichnet, daß** die gefüllten Hohlkugeln als Vernetzer dem Heißschmelzkleber zugegeben werden und dazu die Hohlkugeln nach dem Herstellen der Heißschmelzkleberbeschichtung auf der Schrumpfmanschette auf den noch haftfähigen Heißschmelz-kleber aufgestreut und gegebenenfalls aufgewalzt bzw. eingewalzt und mit diesem verbunden werden.

7. Verfahren nach einem der Ansprüche 1 bis 6, **dadurch gekennzeichnet, daß** als Kunststoff für das Trägermaterial und als Kunststoff für den Heißschmelzkleber identische oder zumindest mischungsfreundliche Kunststoffe verwendet werden.

8. Verfahren nach einem der Ansprüche 1 bis 7 **dadurch gekennzeichnet, daß** die Konzentration des Peroxids oder des Peroxid/Beschleuniger-Gemisches in dem Trägermaterial im Bereich zwischen 5 Gew.-% bis 70 Gew.-% liegt und der solchermaßen vorbereitete Vernetzer in einer Konzentration von 0,1 Gew.-% bis 20 Gew.-%, bevorzugt 1 Gew.-% bis 4 Gew.-%, auf die mit dem Heißschmelzkleber beschichtete Innenfläche der Schrumpfmanschette aufgebracht wird.

9. Verfahren nach einem der Ansprüche 1 bis 8, **dadurch gekennzeichnet, daß** als Peroxid ein organisches Peroxid, insbesondere 1,1 Di(t-butylperoxy)-3,3,5-trimethylcyclohexan eingesetzt wird.

10. Verfahren nach einem der Ansprüche 1 bis 9, **dadurch gekennzeichnet, daß** das Peroxid/Beschleuniger-Gemisch mehr als 10 Gew.-% Peroxid enthält.

11. Verfahren nach einem der Ansprüche 1 bis 10, **dadurch gekennzeichnet, daß** als Beschleuniger ein reaktives Monomer und/oder Oligomer mit zumindest zwei reaktionsfreudigen Doppel- und/oder Dreifach-Kohlenstoff-Kohlenstoff-Bindungen, insbesondere Triallylcyanurat oder Triallylisocyanurat, Verwendung findet.

12. Verfahren nach einem der Ansprüche 1 bis 11, **dadurch gekennzeichnet, daß** die Manschette selbst und der Kleber flammstabilisiert sind.

## Claims

1. Process for producing a shrink sleeve from a thermoplastic for cable sleeves, in particular as sheathing for cable connections and/or cable branches, where areas of, or all of, the internal surface of the shrink sleeve is/are coated with a hot-melt adhesive crosslinkable by means of a crosslinker, where the crosslinker is substantively composed of a peroxide or a peroxide/accelerator mixture, and also an inorganic carrier material or an organic carrier material, where the carrier material is used to apply or introduce the peroxide or peroxide/accelerator mixture onto or into the internal surface ready-coated with the hot-melt adhesive.

2. Process according to Claim 1, **characterized in that** a synthetic-polymer adhesive is used as hot-melt adhesive.

3. Process according to Claim 2, **characterized in that** the synthetic-polymer adhesive is substantively prepared using polyamide, polyolefins, or polymers preferably used for rubber production, e.g. EPDM, EPM, butadiene, or butyl rubber, or using a mixture of the abovementioned constituents.

4. Process according to Claim 1, **characterized in that** a synthetic-polymer carrier material loaded with peroxide or with peroxide/accelerator mixture, e.g. a film, in particular a perforated film, or a network, or hollow beads loaded with peroxide or, respectively, peroxide/accelerator mixture are used as crosslinker.

5. Process according to Claim 4, **characterized in that** the film or the network is added as crosslinker to the hot-melt adhesive, and to this end, after production of the hot-melt-adhesive coating on the shrink sleeve, the film or, respectively, the network is applied to, e.g. rolled onto or laminated to, the hot-melt adhesive which has not yet fully cooled, and is bonded thereto, e.g. adhesive-bonded.

6. Process according to Claim 4, **characterized in that** the loaded hollow beads are added as crosslinker to the hot-melt adhesive, and to this end, after production of the hot-melt-adhesive coating on the shrink sleeve, the hollow beads are scattered onto and, where appropriate, rolled onto or into the hot-melt adhesive while it is still tacky, and are bonded thereto.

7. Process according to any of Claims 1 to 6, **characterized in that** identical or at least miscible synthetic polymers are used as synthetic polymer for the carrier material and as synthetic polymer for the hot-melt adhesive.

8. Process according to any of Claims 1 to 7, **characterized in that** the concentration of the peroxide or of the peroxide/accelerator mixture in the carrier material is in the range from 5% by weight to 70% by weight, and the crosslinker prepared in this way is applied at a concentration of from 0.1% by weight to 20% by weight, preferably from 1% by weight to 4% by weight, to the shrink sleeve internal surface coated with the hot-melt adhesive.

9. Process according to any of Claims 1 to 8, **characterized in that** an organic peroxide, in particular 1,1-di(tert-butylperoxy)-3,3,5-trimethyl-cyclohexane, is used as peroxide.

10. Process according to any of Claims 1 to 9, wherein the peroxide/accelerator mixture comprises more than 10% by weight of peroxide.

11. Process according to any of Claims 1 to 10, **characterized in that** a reactive monomer and/or oligomer having at least two readily reacting double and/or triple carbon-carbon bonds, in particular triallyl cyanurate or triallyl isocyanurate, is used as accelerator.

12. Process according to any of Claims 1 to 11, **characterized in that** the sleeve itself and the adhesive have been rendered flame-retardant.

## Revendications

1. Procédé de fabrication d'une manchette rétractable en matière synthétique thermoplastique pour des manchons de câbles, en particulier en tant qu'enveloppe pour des liaisons de câbles et/ou des dérivations de câbles, dans lequel la surface interne de la manchette rétractable est revêtue par zones ou complètement d'un adhésif thermofusible réticulable au moyen d'un réticulant, le réticulant étant constitué essentiellement d'un peroxyde ou d'un mélange de peroxyde et d'accélérateur ainsi que d'un matériau support inorganique ou d'un matériau support organique, le peroxyde ou le mélange de peroxyde et d'accélérateur étant appliqué sur ou introduit dans la surface interne déjà revêtue de l'adhésif thermofusible au moyen du matériau de support.

2. Procédé selon la revendication 1, **caractérisé en ce qu'**un adhésif synthétique est utilisé comme adhésif thermofusible.

3. Procédé selon la revendication 2, **caractérisé en ce qu'**on fabrique l'adhésif synthétique essentiellement en utilisant du polyamide, des polyoléfines ou des polymères qui sont utilisés de préférence pour la fabrication de caoutchouc tels que par exemple EPDM, EPM, caoutchouc de butadiène ou butylcaoutchouc ou en utilisant un mélange des constituants précités.

4. Procédé selon la revendication 1, **caractérisé en ce qu'**on utilise comme réticulant un matériau support synthétique rempli de peroxyde ou d'un mélange de peroxyde et d'accélérateur, par exemple une feuille, en particulier une feuille perforée, ou un filet ou des sphères creuses remplies de peroxyde ou selon le cas d'un mélange de peroxyde et d'accélérateur.

5. Procédé selon la revendication 4, **caractérisé en ce que** la feuille ou le filet est ajouté en tant que réticulant à l'adhésif thermofusible et à cet effet la feuille ou selon le cas le filet est appliquée, après la réalisation du revêtement d'adhésif thermofusible sur la manchette rétractable, sur l'adhésif thermofusible encore chaud, par exemple au moyen d'un rouleau ou par contrecollage, et est liaisonnée à celui-ci, par exemple par collage.

6. Procédé selon la revendication 4, **caractérisé en ce que** les sphères creuses remplies sont ajoutées à l'adhésif thermofusible comme réticulant et à cet effet les sphères creuses sont répandues, après la réalisation du revêtement d'adhésif thermofusible sur la manchette rétractable, sur l'adhésif thermofusible encore susceptible de coller et le cas échéant appliquées sur celui-ci au rouleau ou selon le cas introduites dans celui-ci au rouleau et liaisonnées avec celui-ci.

7. Procédé selon l'une quelconque des revendications 1 à 6, **caractérisé en ce qu'**on utilise comme matière synthétique pour le matériau support et comme matière synthétique pour l'adhésif thermofusible des matières synthétiques identiques ou au moins commodes à mélanger.

8. Procédé selon l'une quelconque des revendications 1 à 7, **caractérisé en ce que** la concentration de la matière support en peroxyde ou en mélange de peroxyde et d'accélérateur se situe dans la zone en 5% en poids à 70% en poids et le réticulant préparé de la sorte est appliqué en une concentration de 0,1% en poids à 20% en poids, de préférence de 1% en poids à 4% en poids, sur la surface interne revêtue de l'adhésif thermofusible de la manchette rétractable.

9. Procédé selon l'une quelconque des revendications 1 à 8, **caractérisé en ce qu'**on utilise un peroxyde organique, en particulier du 1,1-di(t-butylperoxy)-3,3,5-triméthylcyclohexane comme peroxyde.

10. Procédé selon l'une quelconque des revendications 1 à 9, **caractérisé en ce que** le mélange de peroxyde et d'accélérateur contient plus de 10% en poids de peroxyde.

11. Procédé selon l'une quelconque des revendications 1 à 10, **caractérisé en ce qu'**on utilise comme accélérateur un monomère réactif et/ou un oligomère réactif présentant au moins deux liaisons carbone-carbone doubles ou triples réactives, en particulier du cyanurate de triallyle ou de l'isocyanurate de triallyle.

12. Procédé selon l'une quelconque des revendications 1 à 11, **caractérisé en ce que** la manchette elle-même et l'adhésif sont stabilisés aux flammes.
